# EUROPÄISCHE PATENTSCHRIFT

(11) **EP 0 511 459 B1**
(45) Veröffentlichungstag und Bekanntmachung des Hinweises auf die Patenterteilung: **05.07.1995**
(21) Anmeldenummer: 92101202.7
(22) Anmeldetag: 25.01.1992
(51) Int. Cl.: H02K 24/00, G01B 7/30, G01D 5/14

(54) **Drehmeldesystem**
Synchrosystem
Système synchro

(30) Priorität: 27.04.1991 DE 4113880
(43) Veröffentlichungstag der Anmeldung: 04.11.1992
(73) Patentinhaber: Daimler-Benz Aerospace Aktiengesellschaft, 81663 München (DE)
(72) Erfinder: Hofmann, Fritz, W-8000 München 83 (DE)

(56) Entgegenhaltungen:
- PATENT ABSTRACTS OF JAPAN vol. 7, no. 290 (P-245)24. Dezember 1983 & JP-A-58 162 813
- PATENT ABSTRACTS OF JAPAN vol. 9, no. 156 (P-368)29. Juni 1985 & JP-A-60 031 005
- PATENT ABSTRACTS OF JAPAN vol. 8, no. 159 (P-289)24. Juli 1984 & JP-A-59 058 314

## Beschreibung

Die Erfindung bezieht sich auf ein Drehmeldesystem nach dem Oberbegriff des Patentanspruchs 1 bzw. 2.

Bei Drehmeldesystemen dieser Art, wie sie etwa in Form von induktiv erregten Synchrogebern oder permanentmagnetisch arbeitenden Hallsensorsystemen aus der EP 0009 102 B1 oder der DE-OS 26 28 616 bekannt sind, wird die geforderte Phasenverschiebung zwischen den beiden Meßsignalen, welche aus Gründen eines geringen Rechenaufwands und einer hohen Ansprechempfindlichkeit regelmäßig 90° beträgt, dadurch bewirkt, daß die Meßachsen der Sensorelemente in Umfangsrichtung der Drehachse des Magnetelements um einen mit dem Phasen-Sollwinkel übereinstimmenden Anstellwinkel zueinander geneigt und zentrisch auf die Drehachse ausgerichtet sind. Dabei ist zur exakten Einhaltung des geforderten Phasen-Sollwinkels eine komplizierte gegenseitige Nachjustierung der Sensorachsen erforderlich, um unvermeidbare Fertigungs- und Montagetoleranzen auszugleichen, mit der Folge, daß der Bau- und Kostenaufwand für derartige Drehmelder unerwünscht hoch liegt. Erschwerend kommt hinzu, daß die Sensorachsen zwangsläufig mit einem dem Phasen-Sollwinkel entsprechenden Abstand, also regelmäßig um einen Viertelkreisbogen versetzt zueinander angeordnet werden müssen, was wegen des damit verbundenen Platzbedarfs häufig, vor allem wenn eine miniaturisierte Bauweise angestrebt wird, erhebliche Schwierigkeiten bereitet und die konstruktiven Gestaltungsmöglichkeiten stark einengt.

Aufgabe der Erfindung ist es, ein Drehmeldesystem der eingangs genannten Art zu schaffen, das sich durch eine einfache, kostengünstige und zur Miniaturisierung geeignete Bauweise auszeichnet und zur Einhaltung des geforderten Phasenwinkelabstands der beiden Meßsignale nicht mehr zwangsläufig auf eine winkelabstandsgleiche Achsgeometrie der Sensor-Meßachsen angewiesen ist.

Diese Aufgabe wird erfindungsgemäß durch das im Patentanspruch 1 bzw. 2 gekennzeichnete Drehmeldesystem gelöst.

Aufbauend auf der überraschenden Erkenntnis, daß die gegenseitige Phasenlage der Meßsignale nicht allein vom Winkelabstand der Sensorachsen abhängig, sondern auch durch die Höhenlage des Magnetelements bezüglich der Sensorelemente beeinflußbar ist, wird erfindungsgemäß eine erhebliche bauliche Vereinfachung dadurch erreicht, daß die Sensorelemente unter Verzicht auf eine komplizierte Nachjustierung ihrer Meßachsen auf einem gemeinsamen Einzelträger fest vormontiert und auf diesem bewußt mit den fertigungs- und montagebedingten Einbautoleranzen belassen, die daraus resultierenden Abweichungen vom Phasen-Sollabstand der Meßsignale hingegen problemlos durch einfache Höhenjustierung des Magnetelements relativ zu den Sensorachsen korrigiert werden. Hierdurch ist es möglich, das beanspruchte Drehmeldesystem trotz hoher Meßsignalgenauigkeit äußerst kostengünstig und in miniaturisierter Bauweise anzubieten.

Gemäß einem weiteren Aspekt der Erfindung wird durch die besondere geometrische Anordnung der Sensor-Meßachsen nach Anspruch 2 eine ganz wesentliche bauliche Verbesserung dadurch erreicht, daß der gegenseitige Winkelabstand der Sensorachsen von der zwangsweisen Verknüpfung mit der geforderten Soll-Phasenverschiebung der Meßsignale befreit und als unabhängige Variable in Übereinstimmung mit den jeweils vorliegenden Einbauverhältnissen optimal gewählt werden kann, während die Anpassung der Achsgeometrie an den Phasen-Sollwinkel durch eine entsprechend exzentrische Ausrichtung der Sensorachsen bezüglich der Drehachse des Magnetelementes erfolgt. Hierdurch lassen sich die Sensorelemente auf platz- und kostensparende Weise in Umfangsrichtung der Drehachse dicht nebeneinander liegend positionieren und dennoch ein ausreichend hoher Phasenwinkelabstand der Sensorsignale von regelmäßig 90° einhalten. Dies ist ein entscheidender Beitrag für eine miniaturisierte, konstruktiv einfache Bauweise des Drehmeldesystems.

Eine besonders vorteilhafte Ausgestaltung der Erfindung besteht gemäß Anspruch 3 darin, daß die im Anspruch 2 angegebene Achsgeometrie und die im Anspruch 1 gekennzeichnete Phasenwinkel-Justierung miteinander kombiniert werden.

Im Hinblick auf eine einfache, platzsparende Bauweise werden als Sensorelemente gemäß Anspruch 4 vorzugsweise Hallelementevorgesehen, und aus dem gleichen Grund besteht das Magnetelement gemäß Anspruch 5 zweckmäßigerweise aus einem Permanentmagneten, dessen magnetische Achse senkrecht zur Drehachse verläuft.

In weiterer vorteilhafter Ausgestaltung liegt der gegenseitige Schnittpunkt der Sensorachsen gemäß Anspruch 6 auf der dem Magnetelement abgewandten Seite der Sensorelemente und diesen näher als die Drehachse des Magnetelements, wodurch sich der für die Sensorordnung erforderliche Einbauraum ohne Beeinträchtigung der Drehwinkel-Ansprechempfindlichkeit weiter verringern läßt. Dabei hat sich gemäß Anspruch 7 ein Anstellwinkel für die Sensorachsen von etwa 60° als besonders vorteilhaft erwiesen.

Nach Anspruch 8 wird bei der nominellen Auslegung des Drehmeldesystems die Achsgeometrie der Sensorachsen gezielt so gewählt, daß sich in der bezüglich der Sensorachsen symmetrischen Höhenlage des Magnetelements bewußt eine Abweichung vom geforderten Phasenabstand der Meßsignale ergibt, welche größer als die maximal durch Fertigungs- und Montagetoleranzen verursachte Phasenstreuung ist, so daß sich bei der späteren Justierung des Drehmeldesystems durch zunehmenden Höhenversatz des Magnetelements gegenüber der Symmetrielage sowohl positive wie auch negative Phasenstreuungen korrigieren lassen. Gemäß Anspruch 9 werden zur Höhenjustierung des Magnetelements in besonders bevorzugter, montagemäßig einfacher Weise in abestuften Dickenabmessungen vorgefertigte Distanzstücke verwendet, die aus einem magnetisch neutralen Material bestehen, um Störungen des vom Magnetelement erzeugten Magnetfeldes zu vermeiden.

Zwar ist es im Rahmen der Erfindung durchaus möglich, das Drehmeldesystem nach Art eines Bausatzes anzubieten, der einen vom Magnetelement getrennten Sensortrager mit den daran befestigten Sensorelementen enthält, und die Justierung des Magnetelements bezüglich der Sensorachsen in einer vorgegebenen Lage erst am endgültigen Einbauort durchzuführen, aus Gründen einer größeren Anwenderfreundlichkeit empfiehlt es sich jedoch gemäß Anspruch 10, sämtliche Elemente des Drehmeldesystems in einem gemeinsamen Gehäuse, welches zur Vermeidung äußerer Störeinflüsse magnetisch abgeschirmt ist, im endmontierten und justierten Zustand anzuordnen.

Die Erfindung wird nunmehr anhand eines Ausführungsbeispieles in Verbindung mit den Zeichnungen näher erläutert. Es zeigen in schematischer Darstellung:
Fig. 1 eine teilweise geschnittene Ansicht des Drehmeldesystems;
Fig. 2 die Aufsicht des Sensorträgers und des Magnetelements gemäß Fig. 1; und
Fig. 3 ein Diagramm zur Darstellung des Verlaufs der von den beiden Sensorelementen erzeugten Meßsignale in Abhängigkeit vom Drehwinkel des Magnetelements.

Das in den Fig. gezeigte Drehmeldesystem enthält ein nach außen abgeschlossenes, zweiteiliges Gehäuse 2 aus magnetisch neutralem Material, z.B. Aluminium, bestehend aus einem einstückigen Sensorträger 4 und einem Gehäusedeckel 6, welche auf der Außenseite von einem Abschirmblech aus magnetisch weichem Material umkleidet sind. Im Gehäuse 2 befindet sich ein flach-zylinderförmiges, an einer Welle 10 befestigtes Permanent-Magnetelement 12, welches über Lagerstellen 14 und 16 um eine gehausefeste Drehachse D-D drehbeweglich gelagert ist und dessen magnetische N-S-Achse senkrecht zur Drehachse D-D verläuft.

Der Drehwinkel φ des Magnetelementes 12 wird durch zwei Hallelemente 18 und 20 abgegriffen, welche an den keilförmig zueinander angestellten, der Drehachse D zugekehrten Montageflächen 22, 24 eines einteilig am Träger 4 nach oben vorstehend angeformten Haltestegs 26 befestigt, z.B. mit diesem verklebt sind. Der Ausrichtung der Montageflächen 22, 24 entsprechend liegen die Meßachsen A, B der Sensorelemente 18, 20 in einer zur Drehachse D im wesentlichen senkrechten Ebene und verlaufen unter einem Anstellwinkel α geneigt zueinander und jeweils mit einem Abstand e exzentrisch zur Drehachse D, wobei ihr gegenseitiger Schnittpunkt S auf der sich durch die Keilspitze der Montageflächen 22, 24 und die Drehachse D erstreckenden Mittelebene M des Haltesteges 26 und auf der dem Magnetelement 12 abgekehrten Seite der Sensorelemente 18, 20 liegt.

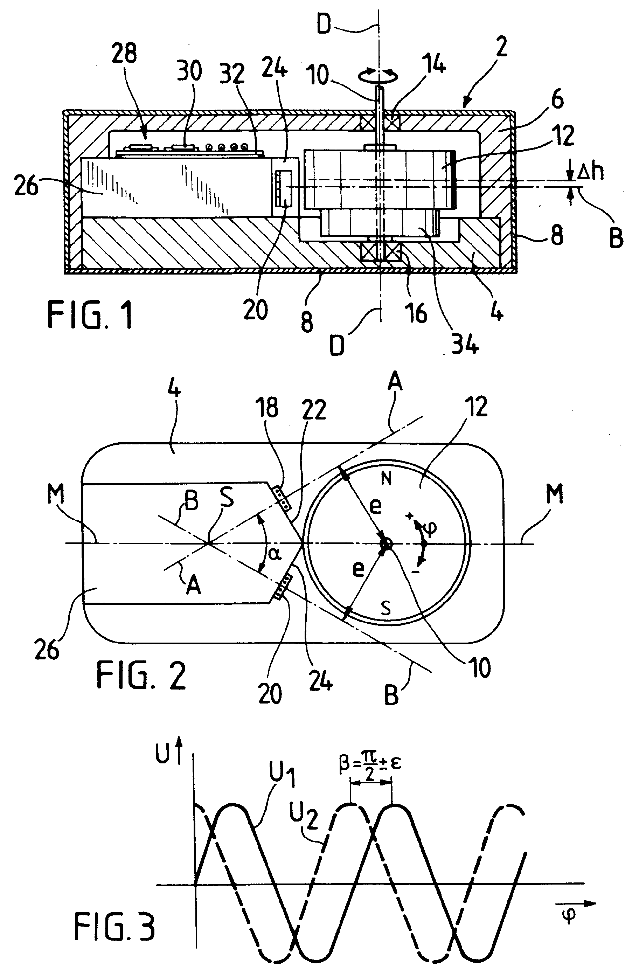

Der Drehwinkel φ des Magnetelementes 12 wird mit hoher Genauigkeit aus zwei, sich in Abhängigkeit vom Drehwinkel sinusförmig ändernden, um einen Phasen-Winkelabstand von 90° verschobenen, im übrigen aber identischen Meßsignalen u₁ und u₂ (Fig. 3) ermittelt. Von dem geforderten Signalverlauf weichen die von den Sensorelementen 18, 20 erzeugten Meßsignale aufgrund unvermeidbarer Fertigungs- und Montagetoleranzen des Drehmeldesystems ab. Diese Abweichungen, mit Ausnahme der Winkelabweichung ε vom geforderten Phasen-Sollwinkel β , werden durch ein den Hallelementen 18, 20 zugeordnetes Widerstandsnetzwerk 28, welches aus einer mit Ausgleichswiderständen 30 bestückten, auf dem Haltesteg 26 angeordneten Leiterplatine 32 besteht (Fig. 1), korrigiert.

Zur Einhaltung des geforderten Phasenwinkelabstands von 90° müssen die Sensor-Meßachsen bei üblichen Systemen in Umfangsrichtung der Drehachse D um einen Viertelkreisbogen zueinander versetzt sowie zentrisch auf die Drehachse D ausgerichtet und zum Abgleich der Phasen-Winkelstreuungen ε gegenseitig justierbar sein.
Aufgrund der anhand der Fig. 2 geschilderten Achsgeometrie hingegen kann der Anstellwinkel α der Sensor-Meßachsen A, B als unabhängige Variable und wesentlich kleiner als 90°, nämlich etwa 60°, gewählt werden, so daß der gegenseitige Winkelversatz der Sensorelemente 18, 20 in Umfangsrichtung der Drehachse D und damit der für die Sensoranordnung erforderliche Einbauraum deutlich reduziert wird. Um mit dieser Achsgeometrie dennoch den geforderten Phasen-Winkelabstand von typischerweise 90° zu erhalten, verlaufen die Sensorachsen A und B jeweils exzentrisch mit einem nach Maßgabe des Anstellwinkels α und des geforderten Phasen-Winkelabstands β bemessenen Abstand e zur Drehachse D. Aus dem Abstand e ergibt sich, in welcher Entfernung von der Keilspitze die Sensorelemente 18 und 20 auf den Montageflächen 22 bzw. 24 zu befestigen sind, während der Keilwinkel der Montageflächen 22, 24 durch den Anstellwinkel α festgelegt wird.

Die Sensorelemente 18, 20 werden mit der beschriebenen Achsgeometrie fest und unter Verzicht auf eine komplizierte, gegenseitige Justierung ihrer Meßachsen A, B am Sensorträger 4 montiert. Die dabei unvermeidbaren, fertigungs- und montagebedingten Phasenwinkelstreuungen ε hingegen werden auf baulich sehr einfache Weise durch einen Höhenversatz Δ h des Magnetelements 12 (Fig.1) gegenüber seiner zu den Sensorachsen A,B symmetrischen Lage korrigiert. Dies geschieht am einfachsten in der Weise, daß die Höhenlage des Magnetelements 12 durch Distanzstücke 34 unterschiedlicher Dicke, welche aus magnetisch neutralem Material bestehen, solange verändert wird, bis der Phasenwinkelabstand der von den Sensorelementen 18, 20 erzeugten Meßsignale exakt mit dem geforderten Sollwert (90°) übereinstimmt. Damit durch die Höhenjustierung des Magnetelements sowohl positive wie auch negative Phasen-Winkelabweichungen ε eliminiert werden können, wird die Achsgeometrie der Sensorachsen A, B bewußt so gewählt, daß sich in der bezüglich der Sensorachsen A, B symmetrischen Höhenlage des Magentelements 12, also bei Δ h = 0, eine Abweichung vom geforderten Phasenwinkelabstand der Meßsignale ergibt, welche größer als die maximal fertigungs- und montagebedingte Phasenstreuung ist.

Liegen beide Sensorachsen A und B in der gleichen Ebene, so werden durch eine Änderung der Höhenlage des Magnetelements 12 beide Meßsignale, u₁ und u₂, in gleichem Maße gegensinnig zueinander verschoben. Will man hingegen erreichen, daß durch die Höhenjustierung des Magnetelements 12 nur jeweils eines der beiden Meßsignale, u₁ oder u₂, phasenverschoben wird, die Phasenlage des jeweils anderen Meßsignals, u₂ oder u₁, hingegen im wesentlichen unverändert bleibt, so werden die Sensorelemente 18, 20 in unterschiedlichen Höhenlagen an den Montageflächen 22, 24 befestigt, d.h. die Sensorachsen A, B liegen in in Richtung der Drehachse D zueinander versetzten, zur Drehachse D senkrechten Ebenen.

## Patentansprüche

1. Drehmeldesystem, bestehend aus mindestens einem drehpositionierbaren Magnetelement (12) zur Erzeugung eines im wesentlichen senkrecht zur Drehachse (D) des Magnetelements gerichteten Magnetfeldes sowie zwei, mit ihren Meßachsen (A,B) unter einem Anstellwinkel (α) zueinander in Umfangsrichtung der Drehachse (D) versetzt angeordneten Magnetfeld-Sensorelementen (18,20) zur Erzeugung von sich jeweils abhängig von der Drehposition (φ) des Magnetelements (12) ändernden, um einen fest vorgegebnen Phasen-Sollwinkelabstand (β) zueinander verschobenen Meßsignalen, (U₁,U₂)
dadurch **gekennzeichnet**, daß
die Sensorelemente (18, 20) auf einem gemeinsamen, einteiligen Sensorträger (4) fest montiert sind und das Magnetelement (12) zur Einjustierung des Phasen-Sollwinkelabstands in Richtung der Drehachse (D) bezüglich der Sensorelemente höhenverstellbar angeordnet ist.

2. Drehmeldesystem, bestehend aus mindestens einem drehpositionierbaren Magnetelement (12) zur Erzeugung eines im wesentlichen senkrecht zur Drehachse (D) des Magnetelements gerichteten Magnetfeldes sowie zwei, mit ihren Meßachsen (A,B) unter einem Anstellwinkel (α) zueinander in Umfangsrichtung der Drehachse (D) versetzt angeordneten Magnetfeld-Sensorelementen (18,20) zur Erzeugung von sich jeweils abhängig von der Drehposition (φ) des Magnetelements (12) ändernden, um einen fest vorgegebenen Phasen-Sollwinkelabstand (β) zueinander verschobenen Meßsignalen (U₁,U₂),
dadurch **gekennzeichnet**, daß
die Meßachsen (A, B) der beiden Sensorelemente (18, 20) unter einem als unabhängige Variable beliebig vorgewählten, vom Phasen-Sollwinkelabstand abweichenden Anstellwinkel (α) angeordnet sind und jeweils exzentrisch mit einem die Winkeldifferenz zwischen gewähltem Anstellwinkel und Phasen-Sollwinkelabstand ausgleichenden Abstand (e) zur Drehachse (D) des Magnetelements (12) verlaufen.

3. Drehmeldesystem nach Anspruch 2,
dadurch **gekennzeichnet**, daß
das Magnetelement (12) zum Einjustieren des Phasen-Sollwinkelabstands in Richtung der Drehachse (D) bezüglich der Sensorelemente (18, 20) höhenverstellbar angeordnet ist.

4. Drehmeldesystem nach einem der vorhergehenden Ansprüche,
dadurch **gekennzeichnet**, daß
als Magnetfeld-Sensorelemente (18, 20) Hallelemente vorgesehen sind.

5. Drehmeldesystem nach einem der vorhergehenden Ansprüche,
dadurch **gekennzeichnet**, daß
das Magnetelement (12) aus einem im Querschnitt kreisförmigen Permanentmagneten mit bezüglich der Drehachse (D) diametral einander gegenüberliegenden Magnetpolen (N, S) besteht.

6. Drehmeldesystem nach einem der vorhergehenden Ansprüche,
dadurch **gekennzeichnet**, daß
der gegenseitige Schnittpunkt (S) der Meßachsen (A, B) auf der dem Magnetelement (12) abgewandten Seite der Sensorelemente (18, 20) liegt.

7. Drehmeldesystem nach Anspruch 6,
dadurch **gekennzeichnet**, daß
die Meßachsen (A, B) einen Anstellwinkel (α) von weniger als 90°, vorzugsweise etwa 60°, besitzen.

8. Drehmeldesystem nach einem der vorhergehenden Ansprüche,
dadurch **gekennzeichnet**, daß
das Magnetelement (12) im einjustierten Zustand eine bezüglich der Sensorelemente (18, 20) unsymmetrische Höhenlage besitzt.

9. Drehmeldesystem nach einem der vorhergehenden Ansprüche,
dadurch **gekennzeichnet**, daß
die Höhenlage des Magnetelements (12) durch unterschiedlich bemessene Distanzstücke (34) aus magnetisch neutralem Material einstellbar ist.

10. Drehmeldesytem nach einem der vorhergehenden Ansprüche,
dadurch **gekennzeichnet**, daß
das Magnetelement (12) und die Sensorelemente (18, 20) einschließlich des Sensorträgers (4) in einem magnetisch abgeschirmten Gehäuse (2, 8) angeordnet sind.

## Claims

1. A synchro system, comprising at least one rotary-positionable magnet element (12) for generating a magnet field which is essentially oriented vertically to the rotary axis (D) of the magnet element and two magnet-field sensor elements (18, 20), which are arranged with their measuring axes (A, B) offset to each other in the peripheral direction of the rotary axis (D) at an application angle (α) for the purpose of generating measuring signals (U₁, U₂), which change respectively in dependence on the rotary position (φ) of the magnet element (12) and which are offset relative to each other by a fixed specified phase nominal angle distance (β), **characterized in that** the sensor elements (18, 20) are firmly mounted on a common one-piece sensor carrier (4), and the magnet element (12) is arranged to be height-adjustable relative to the sensor elements for alignment of the phase nominal angle distance in the direction towards the rotary axis (D).

2. A syncho system, comprising at least one rotary-positionable magnet element (12) for generating a magnet field which is essentially oriented vertically to the rotary axis (D) of the magnet element and two magnet field sensors (18, 20) which are arranged with their measuring axes (A, B) offset to each other in the peripheral direction of the rotary axis (D) at an application angle (α) for the purpose of generating measuring signals (U₁, U₂), which change respectively in dependence on the rotary position (φ) of the magnet element (12) and which are offset relative to each other by a fixed specified phase nominal angle distance (β), **characterized in that** the measuring axes (A, B) of both sensor elements (18, 20) are arranged at an application angle (α), which has been freely preselected as an independent variable and which deviates from the phase nominal angle distance, and that they extend eccentrically at a distance (e) from the rotary axis (D) of the magnet element (12) which compensates the angle difference between selected application angle and phase nominal angle distance.

3. A synchro system according to claim 2, **characterized in that** the magnet element (12) is arranged to be height adjustable relative to the sensor elements (18, 20) for the purpose of aligning the phase nominal angle distance in the direction of the rotary axis (D).

4. A synchro system according to one of the above claims, **characterized in that** resonance elements are provided as magnet field sensor elements (18, 20).

5. A synchro system according to one of the above claims, **characterized in that** the magnet element (12) is composed of a cross-sectionally circular permanent magnet having magnet poles (N, S) which are diametrically opposite each other relative to the rotary axis (D).

6. A synchro system according to one of the above claims, **characterized in that** the opposite intersection point (S) of the measuring axes (A, B) lies on the side of the sensor elements (18, 20) facing away from the magnet element (12).

7. A synchro system according to claim 6, **characterized in that** the measuring axes (A, B) are at an application angle (α) of less than 90°, preferably approximately 60°.

8. A synchro system according to one of the above claims, **characterized in that** the magnet element (12) in its aligned state is at an asymmetric height position relative to the sensor elements (18, 20).

9. A synchro system according to one of the above claims, **characterized in that** the height position of the magnet element (12) is adjustable by way of differently dimensioned spacer elements (34) of a magnetically neutral material.

10. A synchro system according to one of the above claims, **characterized in that** the magnet element (12) and the sensor elements (18, 20) including the sensor carriers (4) are arranged in a magnetically screened housing (2, 8).

## Revendications

1. Système d'indication de rotation, composé d'au moins un élément magnétique (12) positionnable en rotation pour générer un champ magnétique orienté sensiblement perpendiculairement à l'axe de rotation (D) de l'élément magnétique ainsi que de deux détecteurs (18, 20) de champ magnétique dont les axes de mesure (A, B) sont mutuellement décalés d'un angle de réglage (α) dans la direction périphérique de l'axe de rotation (D) et qui produisent des signaux de mesure (U₁, U₂) qui sont mutuellement décalés d'un angle de phase (β) de consigne fixe prédéterminé et varient d'eux-mêmes en fonction de la position angulaire (φ) de l'élément magnétique (12), caractérisé par le fait que les détecteurs (18, 20) sont solidaires d'un support (4) de détecteurs monobloc commun et que l'élément magnétique (12) est monté avec possibilité de réglage en hauteur par rapport aux détecteurs de manière à permettre le réglage de l'écart d'angle de phase de consigne dans la direction de l'axe de rotation (D).

2. Système d'indication de rotation composé d'au moins un élément magnétique (12) positionnable en rotation pour générer un champ magnétique orienté sensiblement perpendiculairement à l'axe de rotation (D) de l'élément magnétique ainsi que de deux détecteurs (18, 20) de champ magnétique dont les axes de mesure (A, B) sont mutuellement décalés d'un angle de réglage (α) dans la direction périphérique de l'axe de rotation (D) et produisent des signaux de mesure (U₁, U₂) qui sont mutuellement décalés d'un angle de phase (β) de consigne fixe prédéterminé et varient d'eux-mêmes en fonction de la position angulaire (φ) de l'élément magnétique (12), caractérisé par le fait que les axes de mesure (A, B) des deux détecteurs (18, 20) sont disposés sous un angle de réglage (α) différent de l'écart d'angle de phase de consigne, choisi en tant que variable indépendante quelconque, et sont excentrés chaque fois par rapport à l'axe (D) de rotation de l'élément magnétique (12) d'une distance (e) qui compense l'écart angulaire entre l'angle de réglage retenu et l'angle de phase de consigne.

3. Système d'indication de rotation selon la revendication 2, caractérisé par le fait que l'élément magnétique (12) est réglable en hauteur dans la direction de l'axe de rotation (D) par rapport aux détecteurs (18, 20) de manière à permettre le réglage de l'angle de phase de consigne.

4. Système d'indication de rotation selon l'une des revendications précédentes, caractérisé par le fait qu'il est prévu comme détecteurs (18, 20) de champ magnétique des éléments à effet de Hall.

5. Système d'indication de rotation selon l'une des revendications précédentes, caractérisé par le fait que l'élément magnétique (12) se compose d'un aimant permanent de section circulaire, dont les pôles (N, S) sont diamétralement opposés par rapport à l'axe de rotation (D).

6. Système d'indication de rotation selon l'une des revendications précédentes, caractérisé par le fait que le point (S) d'intersection mutuelle des axes de mesure (A, B) est situé du côté des détecteurs (18, 20) éloigné de l'élément magnétique (12).

7. Système d'indication de rotation selon la revendication 6, caractérisé par le fait que l'angle de réglage (α) des axes de mesure (A, B) est inférieur à 90°, de préférence est de 60° environ.

8. Système d'indication de rotation selon l'une des revendications précédentes, caractérisé par le fait que l'élément magnétique (12), à l'état réglé, occupe une position en hauteur non symétrique par rapport aux détecteurs (18, 20).

9. Système d'indication de rotation selon l'une des revendications précédentes, caractérisé par le fait que la position en hauteur de l'élément magnétique (12) peut être réglé au moyen de pièces d'espacement (34) de différentes dimensions, réalisées en un matériau magnétiquement neutre.

10. Système d'indication de rotation selon l'une des revendications précédentes, caractérisé par le fait que l'élément magnétique (12) et les détecteurs (18, 20) ainsi que le support de détecteurs (4) sont disposés dans un boîtier (2, 8) blindé magnétiquement.
